# EUROPEAN PATENT SPECIFICATION

(11) **EP 2 572 862 B1**
(45) Date of publication and mention of the grant of the patent: **25.02.2015**
(21) Application number: 12179911.8
(22) Date of filing: 09.08.2012
(51) Int. Cl.: B29C 63/04, F16B 21/16, F16C 13/00

(54) **Profile coating machine**
Vorrichtung zur Beschichtung von Profilen
Machine de revêtement de profilés

(30) Priority: 22.09.2011 DE 202011051396 U
(43) Date of publication of application: 27.03.2013
(73) Proprietor: Düspohl Maschinenbau GmbH, 33758 Schloss Holte-Stukenbrock (DE)
(72) Inventor: Wagner, Uwe, 33335 Gütersloh (DE)
(74) Representative: Ter Meer Steinmeister & Partner

(56) References cited:
- EP-A1- 2 042 450
- EP-A2- 0 997 260
- EP-B1- 1 713 626

## Description

The invention relates to a profile coating machine having a conveyer path for the profile to be coated, and a plurality of holders which are arranged along the conveyer path and on which interchangeable pressure rollers are held such that they roll over the profile.

Profile coating machines serve for coating profiles such as decorative profiles for furniture, door frame profiles and the like, with a decorating material such as a veneer or a foil. The profiles are conveyed longitudinally along the conveyer path so that they pass the pressure rollers. Upstream of the first pressure roller the decorating material which is already provided with an adhesive is supplied in the form of an endless web, so that it may be successively rolled onto the profile by means of the pressure rollers. In each roller position the locations and axis inclinations of the pressure rollers have to be adjusted in accordance with the geometry of the profile to be processed. In case of more complex profile shapes the peripheral surfaces of the pressure rollers are also profiled such that a good match is achieved between the peripheral surface of the pressure roller and a corresponding surface portion of the profile. Consequently, when the coating machine is to be retooled for a different profile, it is generally necessary to replace also the pressure rollers by such having different profile shapes.

Since retooling generally requires the exchange and adjustment of a large number of pressure rollers, the retooling process is relatively time-consuming, which results in correspondingly long down times of the machine and consequently high costs.

Each pressure roller is rotatably supported on an axle bolt which is to be detachably inserted into the corresponding holder. The forces which act upon the pressure rollers when the coating machine is operating are dependent upon the respective positions and postures of the pressure rollers and may include a considerable axial component, for example, when the axis of rotation of the pressure roller is oriented vertically. The axle bolts must therefore be fixed in the holders in such a manner that the axial forces which may possibly occur can be absorbed reliably. To that end, the axle bolt has heretofore be fixed on the holder by a screw-thread connection.

EP 1 713 626 B1 discloses a coating machine wherein the holders for the pressure rollers disposed in the different roller positions along the conveyer are formed by multiple-axis robots, so that the position adjustment of the pressure rollers may be automated. The interchangeable pressure rollers are held on the robot arms by means of hydraulic or pneumatic couplings.

It is an object of the invention to provide simple means for a simple and quick exchange of the pressure rollers.

In order to achieve this object, according to the invention, the holders have snap-fastening means for detachably receiving axle bolts of the pressure rollers.

The invention is based on the consideration that the pressing force with which the pressure roller presses against the surface of the profile will in any case imply a corresponding reaction force which acts in transverse direction of the axis of the pressure roller and therefore has a tendency to tilt the axle bolt in the holder. Even when relatively large axial forces should occur, this tilting will prevent the axle bolt from being withdrawn axially from the holder. Thus, for safely securing the axle bolt in the holder, it is sufficient to provide simple snap-fastening means which permit a quick and simple exchange of the roller when the coating machine is retooled and no tilting forces are present.

Useful details of the invention are indicated in the dependent claims.

Embodiment examples will be described below in conjunction with the drawings in which:
- Fig. 1: shows an axial section of a pressure roller and an associated holder in a profile coating machine according to the invention;
- Fig. 2: shows a pressure roller and the holder of Fig. 1 in a condition when the pressure roller is exchanged;
- Fig. 3: is a schematic side-elevational view of a profile coating machine; and
- Fig. 4: shows a holder and a pressure roller of a profile coating machine according to a different embodiment of the invention.

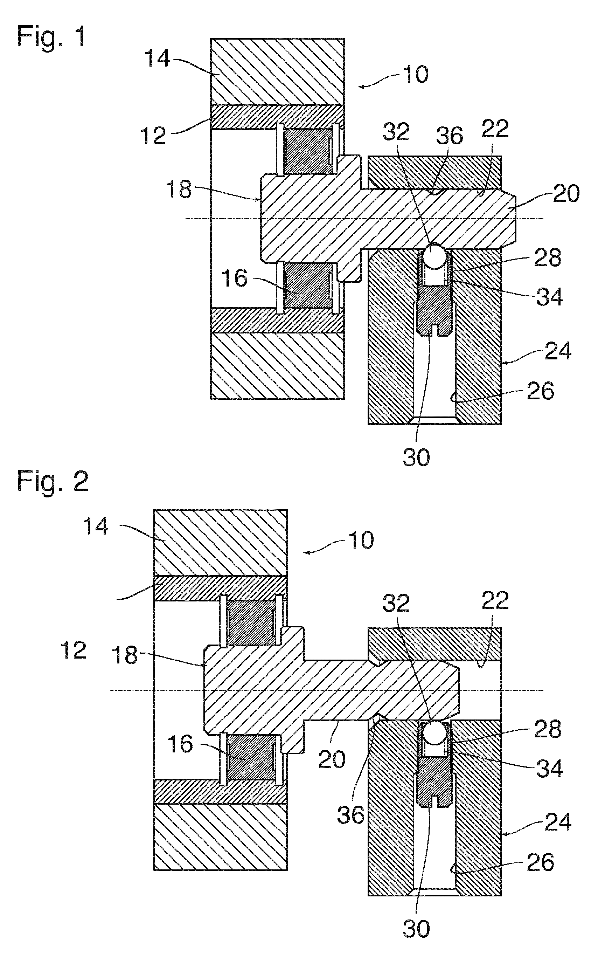

In Fig. 1, a pressure roller 10 of a profile coating machine has been shown in an axial section. The pressure roller has a hollow cylindrical core 12 made of metal and surrounded by a surface layer 14 made of rubber-elastic material. The core 12 is supported on an axle bolt 18 by means of a roller bearing 16 so as to be rotatable but immobile in axial direction.

On its end opposite to the pressure roller 10, the axle bolt 18 has a cylindrical mounting portion 20 which is received in a bore 22 of the holder 24 with minute play. In this example, the holder 24 is formed by a metal block and has a cross-bore 26 opening out into the bore 22 at right angles. A pressure member 30 that is formed by a grub screw and accommodates a detent ball 32 is screwed into a threaded portion 28 of the cross-bore 26. The spring 34 biases the detent bore 32 elastically into a groove 36 that is formed continuously in the peripheral surface of the mounting portion 20. In this way, the axle bolt 18 is secured in an axial position in which the free end of the mounting portion 20 slightly projects from the bore 22 of the holder.

When the pressure roller 10 is to be exchanged, it is sufficient to exert a slight pressure with a finger onto the projecting end of the mounting portion 20 in order to axially push the axle bolt 18 out of the bore 22. The groove 36 has chamfered flanks, so that the detent ball 32 will be pressed outwardly against the force of the spring 34 and release the axle bolt, as has been shown in Fig. 2.

On its free end, the mounting portion 20 has an insertion cone which, when the pressure roller 10 is inserted into the holder, facilitates the insertion of the axle bolt into the bore 22 and the displacement of the detent ball 32.

In the example that has been shown here, the pressure member 30 is provided on the end from which the detent ball 32 projects with a crimped edge that holds the detent ball and the spring 34 undetachably in the pressure member. In a modified embodiment, the detent ball and the spring may be accommodated directly in the cross-bore 26 and secured against detachment by a collar formed at the end of this cross-bore. Then, in place of the pressure member 30, there will only be provided a counter bearing for the spring 34, this counter bearing being screwed into the cross bore 26. The force of the spring 34 can be suitably controlled via the depth to which the counter bearing is screwed-in.

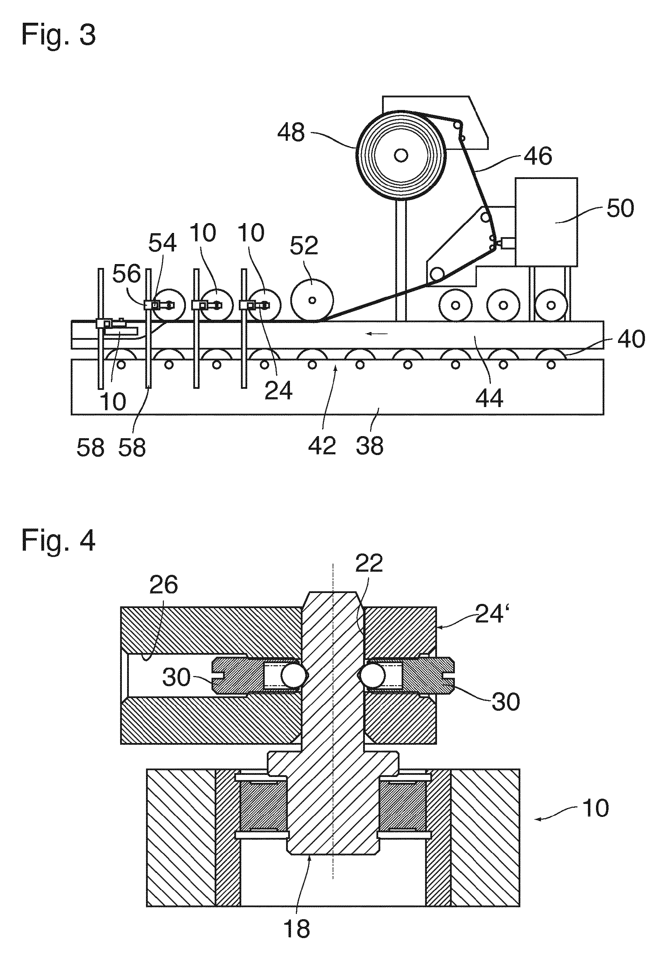

Fig. 3 schematically shows a profile coating machine having a plurality of pressure rollers 10 of the type described above. A plurality of conveyer rollers 40 are supported in a bed 38 of the profile coating machine and, together, form a conveyer path 42 for a profile 44 to be coated. On the conveyer path 42, the profile 44 is conveyed in the direction indicated by an arrow (to the left in Fig. 3) . A coating material, e.g. a foil 46, is withdrawn as an endless web from a coil 48, is provided with adhesive in an applicator station 50, and is then applied to the top surface of the profile 44 by means of an applicator roll 52.

The pressure rollers 10 are disposed along the conveyer path 42 in such a manner that they will gradually roll the foil 46 onto the surface of the profile 44, proceeding outwardly from the web centre line.

Each pressure roller 10 has its axle bolt 18 secured in a holder 24 which itself is held on a beam 54 that extends horizontally and transverse to the conveying direction of the profile. Each beam 54 is held by a universal clamp 56 in height-adjustable manner on a post 58 that rises from the bed 38. For connecting the holder 24 to the beam 54, there is provided a clamp that is not visible in the drawing and permits an adjustment of the lateral position of the pressure roller 10 as well as an adjustment of the inclination of the axis of rotation of the pressure roller in both the vertical direction and a horizontal direction transverse to the conveying direction.

In the example shown, the last pressure roller 10, located leftmost in the drawing, is adjusted such that it rolls over a lateral face of the profile 44 with a vertical axis of rotation (in order to apply an edge strip of the foil 46 to the lateral face of the profile). The mounting of the axle bolt 18 of this pressure roller in the holder 24 must therefore be stable enough to absorb at least the proper weight of the pressure roller 10 in order to prevent the latter from falling downwardly out of the holder. However, the holding force does not need to be provided alone by the snap-fastening means formed by the detent ball 32 and the groove 36. Instead, a major part of this force will be generated by frictional forces that are caused by a reaction force that is induced when the pressure roller 10 rolls over the lateral face of the profile 14, said reaction force having the tendency to tilt the mounting portion 20 of the axle bolt in the bore 22.

Although not visible in Fig. 3, the pressure rollers 10 are amounted in pairs and symmetrically to the longitudinal centre axis of the profile 44. Preferably, the axes of rotation are somewhat inclined, so that the two pressure rollers of the pair form a V-shaped configuration in a top plan view. Consequently, when the pressure rollers roll over the surface of the profile 44, the foil 46 is subject to outwardly directed frictional forces which have the tendency to straighten the foil on the surface of the profile 44. In conjunction with this, again, reaction forces occur which have the tendency to withdraw the axle bolts 18 of these pressure rollers from their holders 24. However, these forces may also be absorbed by the tilting effect that has been described above, in conjunction with the effect of the snap-fastening means.

Fig. 4 illustrates a modified embodiment example of a holder 24' for the pressure roller 10. In this example, two pressure members 30 are disposed opposite to one another on both sides of the bore 22, so that their detent balls 32 engage in the same groove of the axle bolt 18. One of the two pressure members 30 (the left one in Fig. 4) is entirely accommodated in the depth of the cross-bore 26. The outer part of this cross-bore 26 may have an internal thread an may for example be used for mounting the holder 24' to the clamp that has been mentioned above and provides the connection with the beam 54.

## Claims

1. A profile coating machine having a conveyer path (42) for the profile (44) to be coated, and a plurality of holders (24; 24') which are disposed along the conveyer path (42) and on which interchangeable pressure rollers (10) are held such that they roll over the profile (44), **characterised in that** the holders (24; 24') have snap-fastening means (32) for detachably receiving axle bolts (18) of the pressure rollers (10).

2. The profile coating machine according to claim 1, wherein the axle bolts (18) each have a mounting portion (20) that is inserted into a bore (22) of the holder (24; 24'), and wherein a cross-bore (26) that opens out into said bore (22) accommodates, as snap-fastening means, a detent ball (32) that is biased into a recess (36) of the mounting portion (20) by a spring (34).

3. The profile coating machine according to claim 2, wherein the detent ball (32) is held in a pressure member (30) that is screwed into the cross-bore (26).

4. The profile coating machine according to claim 2 or 3, wherein the recess of the mounting portion (20) is configured as a continuous groove (36) in the peripheral surface of the mounting portion.

## Patentansprüche

1. Profilummantelungsmaschine mit einer Förderstrecke (42) für das zu ummantelnde Profil (44) und mehreren längs der Förderstrecke (42) angeordneten Haltern (24; 24'), an denen auswechselbare Andruckrollen (10) so gehalten sind, dass sie an dem Profil (44) abrollen, **dadurch gekennzeichnet, dass** die Halter (24; 24') Rasteinrichtungen (32) zur lösbaren Aufnahme von Achsbolzen (18) der Andruckrollen (10) aufweisen.

2. Profilummantelungsmaschine nach Anspruch 1, bei der die Achsbolzen (18) jeweils einen Befestigungsabschnitt (20) aufweisen, der in eine Bohrung (22) des Halters (24; 24') eingesteckt ist und bei der eine in die Bohrung (22) mündende Querbohrung (26) als Rasteinrichtung eine Rastkugel (32) aufnimmt, die durch eine Feder (34) in eine Vertiefung (36) des Befestigungsabschnitts (20) vorgespannt ist.

3. Profilummantelungsmaschine nach Anspruch 2, bei der die Rastkugel (32) in einem in die Querbohrung (26) eingeschraubten Druckstück (30) gehalten ist.

4. Profilummantelungsmaschine nach Anspruch 2 oder 3, bei der die Vertiefung des Befestigungsabschnitts (22) als in der Umfangsfläche des Befestigungsabschnitts umlaufende Nut (36) ausgebildet ist.

## Revendications

1. Machine de revêtement de profil, comportant un trajet de convoyeur (42) pour le profil (44) devant être revêtu, et une pluralité de supports (24 ; 24') qui sont disposés le long du trajet de convoyeur (42), et sur lesquels des rouleaux de pression interchangeables (10) sont maintenus de telle sorte qu'ils roulent sur le profil (44), **caractérisée en ce que** les supports (24 ; 24') comportent des moyens de fixation à encliquetage (32) pour recevoir de façon détachable des boulons d'axe (18) des rouleaux de pression (10).

2. Machine de revêtement de profil selon la revendication 1, dans laquelle les boulons d'axe (18) comportent chacun une partie de montage (20) qui est insérée dans un perçage (22) du support (24 ; 24'), et dans laquelle un perçage transversal (26) qui s'ouvre hors dudit perçage (22) reçoit, à titre de moyens de fixation par encliquetage, une bille de détente (32) qui est sollicitée dans une cavité (36) de la partie de montage (20) par un ressort (34).

3. Machine de revêtement de profil selon la revendication 2, dans laquelle la bille de détente (32) est maintenue dans un élément de pression (30) qui est vissé dans le perçage transversal (26).

4. Machine de revêtement de profil selon la revendication 2 ou 3, dans laquelle la cavité de la partie de montage (20) est configurée sous la forme d'une rainure continue (36) dans la surface périphérique de la partie de montage.
